# EUROPEAN PATENT APPLICATION

(11) **EP 1 085 477 A2**
(43) Date of publication of application: **21.03.2001**
(21) Application number: 00307664.3
(22) Date of filing: 05.09.2000
(51) Int. Cl.: G07F 7/10, G07F 17/16

(54) **Self-service terminal**

(30) Priority: 20.09.1999 GB 9922235
(71) Applicant: NCR International, Inc., Dayton, Ohio 45479 (US)
(72) Inventor: Waller, Michael, London NW11 0DG (GB); de Vries, Govert, 5616 BE Eindhoven (NL); Johnson, Graham Iain, Tayport, Fife DD6 9AA (GB)
(74) Representative: Cleary, Fidelma

(57) **Abstract**

An automated teller machine (ATM) is provided with means for accessing an information resource, the information resource containing information pertinent to a particular geographical location and output means for providing information loaded from the accessed information resource to a user. Hence the ATM may be used as a source of local information such as tourist information, local events, attractions etc. Maps may be downloaded to mobile devices or printed off using the ATM printer.

## Description

The present invention relates to a self-service terminal and in particular to a self-service terminal having an information retrieval and display facility.

In recent years, self service terminals, in particular automated teller machines (ATMs), have become commonplace, with most people regularly using such terminals for everyday banking requirements, such as cash withdrawal transactions, account balance requests, mini-statement requests, cheque book ordering and deposit transactions. Automated teller machines are typically located in or outside banks in high streets, and in other public places such as airports, railway stations, shopping malls etc., but are becoming increasingly common in smaller commercial enterprises such as stores, supermarkets, service stations, restaurants and amusement arcades.

Due to their popularity with the public and wide-scale availability, the commercial value of automated teller machines has been recognised and financial institutions frequently advertise financial products to customers during transactions at the ATM. In the commercial sector, stores and supermarkets sometimes use the ATMs located in their premises to display information relating to product promotions during a transaction and to dispense coupons or vouchers which may be subsequently exchanged against purchases at the checkout. However, the use of ATMs for applications other than common financial transactions has to date largely been restricted to marketing opportunities by the financial institution or other commercial enterprise that owns or leases the terminal and the full potential of these terminals has not been exploited.

Public access terminals or kiosks have recently appeared in places such as airports, railway stations and libraries. Such terminals may provide information about flights, train times, local hotel accommodation and tourist attractions and may be equipped with booking and payment facilities to allow purchase of tickets and reservation of rooms etc. Other "pay as you use" public access terminals are found in libraries which allow a user to access on-line data bases and other information facilities and to send and receive electronic mail. However, such terminals are not conveniently available to many and necessitate a visit to a library or station in order to use. Moreover, such terminals are sometimes perceived as rather complicated to use, especially by those many members of the public who are unfamiliar with the use of personal computers and, to date, have not been widely accepted.

As many people become more affluent and increased competition has caused airfares to fall, the tourism industry is enjoying a boom in many parts of the world with more and more people travelling within their own country and abroad to visit new locations. In the commercial world too, business travel is also on the increase, as markets and industries have become more global. Currently, visitors to a new location generally will purchase a local guide book or pay a visit to the local tourist information office, in order to obtain maps and information about local attractions and events. However, guide books are expensive and often do not contain very up-to-date information while visits to a local tourist information office frequently involves standing in a queue for long periods which is undesirable if one only has a relatively short time available.

It is an object of the present invention to provide a self-service terminal having with increased functionality which provides additional services to traditional financial transactions.

According to an aspect of the present invention, there is provided an automated teller machine (ATM) comprising user interface means for allowing a user to interact with the terminal during a transaction, cash dispensing means for delivering cash to a user during a cash withdrawal transaction, access means for accessing an information resource, the information resource containing information pertinent to a particular geographical location and information output means for providing information loaded from the accessed information resource to a user.

The user interface preferably includes one or more selectable information options, each option having an associated information resource address. The information resource is preferably an Internet or intranet resource but may also be a database or datawarehouse stored locally at the ATM or at a remote host.

The ATM is preferably provided with a Global Positioning System (GPS) receiver and appropriate mapping application software so that routes can be downloaded to suitably equipped mobile devices. The ATM may also incorporate an electronic signpost for guiding a user of or person in proximity to the ATM in the direction of a place or venue in the locality of the ATM and/or for displaying promotional or advertising information. Since the ATM is networked, the information displayed by the electronic signpost may be updated periodically and adapted to reflect the location of the ATM.

From a further aspect, the invention resides in a method of providing location-based information at an automated teller machine, comprising the steps of identifying a user of the ATM, identifying an information resource address associated with an information option selected by the user of the ATM and accessing the identified information resource. Information relating to the selected information option loaded from the accessed information resource is displayed on the ATM screen and the user may interact with the displayed information to access one or more further information resources.
To maximize the appeal of use of the ATM as an information resource, a user character profile may be generated in accordance with the information options selected by the user during a transaction and information output to the user in a manner adapted to that character profile.

Information may be printed off from the ATM printer or may be downloaded to a user-held mobile device. The downloaded data may include an animated agent adapted to reflect the character profile generated for that user.

Since many users in the ATM locality will require the same information or may be interested in information retrieved by others of which they are not aware, data relating to information accessed from an information resource by a user during a transaction may be stored at the ATM for reference by future users of the ATM.

From yet another aspect, the invention resides in a electronic signpost system comprising one or more networked terminals, each terminal incorporating display means for displaying information guiding users of the terminal or persons in the proximity of the terminal in the direction of places or events in the locality of that terminal.

In order that this invention can be more readily understood, reference will now be made, by way of example, to the accompanying drawings in which:
Figure 1 is a block diagram of an SST network embodying the invention;
Figure 2 is a pictorial representation of an ATM of the SST network of Figure 1; and
Figure 3 is a simplified block diagram of the ATM of Figure 2

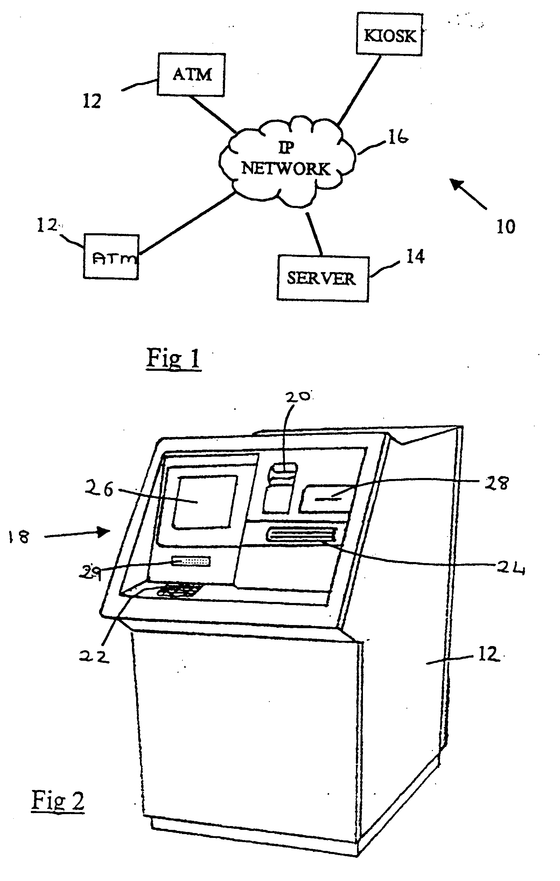

Referring to Figure 1, there is shown a SST network system 10 comprising a plurality of ATMs 12 and non-cash kiosks (two are shown for illustrative purposes) and a server 14 in the form of a host device, all interconnected by reliable and secure communication links 16 in the form of an IP (internet protocol) network, such as the Internet.

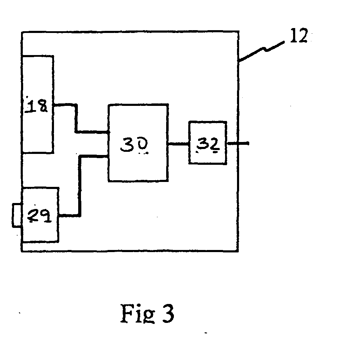

In Figure 2, there is shown an ATM 12 comprising a user interface 18 to allow a user to interact with the terminal during a transaction. The user interface 18 includes a card reader slot 20 for insertion of a user identification card at the commencement of a transaction, a encrypting keypad 22 for entering information during a transaction, a cash dispensing slot 24 for delivery of currency notes stored inside the ATM 12 to a user during a cash withdrawal transaction, a touch screen 26 for displaying information to the user and for facilitating interaction with the information displayed thereon, a printer slot 28 for delivery of printed materials such as a transaction receipt or other information to the customer during a transaction. The ATM 12 is provided with a digital data port 29 in the form of an IrDA-compliant (Infra-red Data Association) port to facilitate communication with portable digital devices such as Personal Digital Assistants (PDAs) or mobile telephones. The card reader, cash dispenser, envelope deposit and printer modules associated with the respective slots 20, 24 and 28 are designated by the same reference numerals in Figure 3. The nature and operation of these modules are well known and will not be discussed further herein.

With reference to Figure 3, the ATM 12 further comprises a controller unit 30 that communicates with components of the user interface 18. The controller unit 30 includes a processor and a non-volatile RAM and controls the operation of the ATM. The controller also transmits and receives data from the IP network 16 via a network connection 32. The controller unit 30 receives signals from and transmits signals to the various modules of the user interface 18. It should be understood that the controller 30 controls the amount of cash dispensed by the cash dispenser 24, the information displayed on the touch screen 26, the information printed by the printer 28 and the information downloaded to a portable device via the port 29. The structure and operation of the controller 30 is well known and therefore will not be described in detail herein.

An information access transaction at the ATM 12 will now be described with continuing reference to Figures 1 to 3. The user approaches the ATM 12, inserts his or her user identification card into the card reader slot 20 and data encoded on the card is read. The user is requested to enter a PIN and to select a transaction from a menu of the various facilities available that is displayed on the screen 26. These facilities include Local Information, Route Guidance, Schedule Planner, ATM Neighbourhood Information as well as the usual financial transaction options such as Cash Withdrawal, Balance Enquiry, Mini-Statement print out, etc. The processor 32 sends out a transaction authorisation request over the network 16 and awaits receipt of validation of the authorisation request from the host 14. If the Cash Withdrawal facility or other financial transaction option is selected, the transaction continues in the usual way and will not be described further herein.

If the user wishes to obtain information about local attractions or events, he or she selects the Local Information facility on the touch screen 26. A further menu of options comprising various categories of local information is displayed on the screen. These categories typically include Events, Places of Interest, Restaurants, Shopping, Street Maps etc. If the user would like information regarding local attractions, he or she selects this option on the touch screen 26. A further list of options is displayed. If the visitor is interested in one or more particular types of attraction, for example, museums, art galleries, historical buildings architecture etc., the appropriate option or options may be selected on the touch screen 26. If the user does not wish to restrict the information required in this way, he or she may select an option for information on all the attractions in the area.

When the user has decided on the categories of information he or she requires, the options selected on the touch screen 22 are transmitted to the processor unit 32 and are converted to the appropriate one or more web and application address. The processor 32 launches a browser application 42 appropriate to the application address and instructs that browser 42 to locate and load from the Internet 16, a web page appropriate to the specified web address. Once the web page is loaded, a display driver implemented within the processor 32 causes the web page to be displayed on the screen 26 to be viewed by the user and optionally interacted with by means of, for example, a touch screen overlay (not shown) or other appropriate sensors.

A hard copy of the information may be obtained by selecting a print option, the printed copy being delivered through the printer slot of the ATM. The user may select from a variety of different sizes and whether a colour print is required. Alternatively, an electronic copy of the information may be downloaded to a portable device such as a Personal Digital Assistant (PDA) or a mobile telephone via the port 29. This will allow the user to view the information at a later time or to upload the information to another device (such as a personal computer).

The cost of the transaction is deducted from the user's bank account as has been read from the inserted user identification card at the commencement of the transaction and will, of course, depend on the amount and nature of the information retrieved, the size of print-out selected etc. However, it should be appreciated that the costs may also be covered by the information providers such as enterprises that run tourist attractions, restaurants and shops etc. The availability of such information to the public via the ATM network offers an obvious marketing opportunity to enterprises where such information was accessible by those having PCs connected to the web in the past.

It may often be the case that a visitor finds himself in a particular street for some reason or other, for example he has just visited some attraction or attended a meeting and has some time to kill. In such a case, the visitor may wish to know of places of interest within a localized area, eg within a 20 minutes walk or a short bus ride from the ATM. The visitor may select the ATM Neighbourhood Information option from the categories displayed on the screen. In this instance, a customized web page containing information about events and places of interest within the localized area is retrieved and displayed to the user.

The ATM 12 is also equipped with a route guidance facility. A user may select the Route Guidance option on the screen if he or she wishes to obtain directions to a particular address or area. The user is requested to enter details of the desired destination via the keypad 22. Mapping application software is available from several suppliers and is preferably stored in the memory unit 34 of the ATM. Alternatively, the route guidance information may be accessed over the Internet from an appropriate web page in a similar manner to the local information described above.

The user may select from a variety of different routes to the desired destination, for example, the shortest walk, the fastest using public transport or routes that incorporate various places of interest on the way. For each of these possibilities, the user can interact with the screen to obtain an estimate of the travel time or the distance involved. The selected route may be displayed on the screen in the form of a map, or if preferred, as a series of detailed instructions such as turn right into Baker Street, take the second left into Crawford Street etc. This may then be printed and delivered to the user via the printer slot 28 or may be downloaded to the customers PDA or mobile telephone via the port 29.

An electronic sign system may also be associated with the ATM 12. This could comprise an illuminated display incorporated into the user interface of the ATM 12 which would display the name of the desired destination and one or more arrow pointing in the general direction thereof. Alternatively, the display could be incorporated into the pavement beneath the ATM, again pointing the user in the initial direction he or she should take from the ATM 10 to the desired destination. Such an electronic sign system could also routinely display tailored information to users about events and venues in the neighbourhood of a particular ATM. Since an ATM can generally be found in most major thoroughfares within towns and cities, the presence of such tailored signs either on or in the vicinity of the individual ATMs 12 of the ATM network 10 within a town or city would form a very versatile and flexible sign system, in that it can be easily updated as events change or according to the time of day etc.

In addition, the ATM is provided with a Global Positioning System (GPS) receiver and appropriate mapping application software so that a user having a PDA equipped with the appropriate GPS facility can download the route in a GPS system. A number of manufactures presently offer GPS units, connectors and software that can be used to incorporate route and travel guidance functionality in PDA's, for example, Solus Pro, a mapping application for handheld computers from Delorme ( http://www.delorme.com/earthmate/)

A user may also request a customised plan of activities. For example, a business traveller may have finished meetings and may have five hours to spend in a particular city before he or she must leave for the airport to catch a flight home. He or she would like to see as many of the city's attractions as possible within that time and would also like to have dinner in a nice Indian restaurant. On selecting the Schedule Planner option on the initial menu, the user is presented with a series of interactive menus which allow him or her to input further details such as the length of time available to spend and information as to the user's interests and preferences.

On the basis of the information obtained from the user, a series of schedules are proposed for the user's choice, each designed so as to suit the user's individual preferences and to optimise the time available. The user selects one or more of schedules as preferred, and requests a print-out or alternatively downloads these to a PDA. The user may also request a map of the route covered by the selected schedule or detailed directions of how to get from place to place.

The information downloaded from the ATM 12 to a mobile device such a PDA or mobile telephone may include an animated agent whose character reflects the location being visited as well as the personality of the user as is determined from the information input by the user during interaction with the ATM. For example, if a user has indicated that he or she wishes to visit many attractions in a relatively short period of time, the downloaded agent will be displayed as active and extrovert. Alternatively, if a user has indicated that he or she wishes to relax and spend lots of time in cafes, restaurants and bars, the agent will be displayed as a slower, more easy-going character.

It should be understood that the information which may be retrieved at a particular ATM will be in general be relevant to a specific geographical region. For example, for an ATM located in central London, the information may be relevant to London only or to London and South East England only or to the whole of the United Kingdom. However, it is possible that information relevant to a different country entirely can be retrieved at the ATM by retrieving and downloading the appropriate web pages.

It should also be understood that over time when a user has conducted several such information access transactions at an ATM, that a profile of the user's preferences and perceived needs may be built up and stored in the host 14. For example, if a particular user frequently requests information about book shops or a particular type of restaurant in an area, this information could be automatically loaded when an information access transaction is requested by that user in the future. The user is then asked if he or she would like such information during this particular transaction and if they do they are presented with it immediately without having to navigate through layers of menus to get to the advice that he or she seeks in each and every transaction.

Although the preferred embodiments describes use of the keypad 22 and the touch screen 26 to input information to the ATM, it should be understood that the ATM could be provided with a speech recognition facility to allow the user to interact with the ATM by issuing voice commands.

The invention also allows previous users of the ATM 12 to leave behind "clues" as to their interests and preferences. These may be displayed on the touch screen 24 after the transaction or may be requested by a future user. Alternatively, the electronic sign system described above could point in the direction that a previous user has gone. This feature would appeal particularly to younger users and would point a future user toward a venue or event that may not normally be retrieved during their transaction. Of course, it should be understood that a more private user has the option to choose that details of their transaction not be available to future users.

Whilst the invention provides great benefit in the Internet environment, it is not essential that the information resource is an Internet resource: information could be held on an Intranet or in a database of any description. Many variations are possible without departing from the inventive concepts.

## Claims

1. An automated teller machine (ATM) comprising
user interface means for allowing a user to interact with the terminal during a transaction;
cash dispensing means for delivering cash to a user during a cash withdrawal transaction;
access means for accessing an information resource, the information resource containing information pertinent to a particular geographical location; and
information output means for providing information loaded from the accessed information resource to a user.

2. An automated teller machine according to claim 1, wherein the user interface includes one or more selectable information options.

3. An automated teller machine according to claim 2 or 3, wherein a selectable information option has an associated information resource address.

4. An automated teller machine according to any of claims 1 to 3, wherein the information resource is an Internet or intranet resource.

5. An automated teller machine according to any preceding claim, further comprising a Global Positioning System (GPS) receiver.

6. An automated teller machine according to claim 5, further comprising mapping application software.

7. An automated teller machine according to any preceding claim, further comprising an electronic signpost for guiding a user of or person in proximity to the ATM in the direction of a place or venue in the locality of the ATM and/or for displaying promotional or advertising information.

8. An automated teller machine according to claim 7, wherein the information displayed by the electronic signpost is updated periodically.

9. A method of providing location-based information at an automated teller machine, comprising the steps of
identifying a user of the ATM;
identifying an information resource address associated with an information option selected by the user of the ATM; and
accessing the identified information resource.

10. The method according to claim 9, further comprising displaying information relating to the selected information option loaded from the accessed information resource.

11. The method according to claim 10, wherein the user may interact with the displayed information to access one or more further information resources.

12. The method according to any of claims 9 to 11, further comprising the step of generating a user character profile in accordance with the information options selected by the user during a transaction and outputting information to the user in a manner adapted to that character profile.

13. The method according to any of claims 10 to 12, further comprising downloading data relating to the selected information option loaded from the accessed information resource to a user-held mobile device.

14. The method according to claim 13 when dependent on claim 12, wherein the downloaded data includes an animated agent adapted to reflect the character profile generated for that user.

15. The method according to any of claims 9 to 14, further comprising the step of storing data relating to information accessed from an information resource by a user during a transaction at the ATM for reference by future users of the ATM.

16. An electronic signpost system comprising one or more networked terminals, each terminal incorporating display means for displaying information guiding users of the terminal or persons in the proximity of the terminal in the direction of places or events in the locality of that terminal.
